# EUROPEAN PATENT SPECIFICATION

(11) **EP 0 458 419 B1**
(45) Date of publication and mention of the grant of the patent: **09.08.1995**
(21) Application number: 91201215.0
(22) Date of filing: 21.05.1991
(51) Int. Cl.: A22C 17/00

(54) **Kebab skewering device**
Aufspiessvorrichtung für Kebab
Embrocheur de kebab

(30) Priority: 22.05.1990 NL 9001186
(43) Date of publication of application: 27.11.1991
(73) Proprietor: STORK TITAN B.V., 5831 AV Boxmeer (NL)
(72) Inventor: Kusters, Johannes Karel Oda, NL-5491 GH St.Oedenrode (NL); van der Putten, Joost Adrianus Wilhelmus Helena, NL-5735 AP Aarle Rixtel (NL)
(74) Representative: Hoorweg, Petrus Nicolaas

(56) References cited:
- FR-A- 2 634 982
- NL-C- 181 548
- US-A- 3 405 422
- US-A- 3 691 608
- US-A- 4 069 960

## Description

The present invention relates to a device for placing one, and not more than one, elongate carrier of substantially round section into each of a number of grooves arranged in a base plate, comprising:
- a holder arranged above the base plate for carriers extending substantially parallel to the groove;
- a slide plate which is arranged between the holder and the base plate and which is provided with at least one through-slot extending parallel to the grooves arranged in the base plate, and which is movable in the direction extending perpendicularly thereof.

Such a device is known from NL-C-181548.

In this known device a round rod is arranged in each of the slots, the diameter of which rod is considerably greater than the diameter of the elongate carriers. The dimensions of the slot are such that the rod can perform a movement in transverse direction inside the slot. During the operation of this known device the slide plate is subjected to a repeated shaking movement so that the rods will roll reciprocally inside the slots. The elongate carriers, usually formed by kebab sticks, will be forced by gravity into the slots and then be forced one by one into the grooves by the reciprocal rolling of the rods, this until one carrier is situated in each of the grooves arranged in the base plate.

This known device has the drawback that a large number of separate components are necessary herefor. Since this device is typically used in preparing food products, hygiene is a primary requirement. Because of the large number of separate components regular cleaning is awkward to carry out.

In such a known device, which comprises a large number of grooves, the shaking movement must in any case be continued for a long period to achieve an acceptable probability that a carrier is situated in each of the grooves. With a short operating cycle the efficiency of the devices is therefore low and the efficiency can only be increased by a very time-consuming operating cycle. It is the intention to achieve an operating cycle duration in the order of 1 to 2 seconds. This effect is further exacerbated when carriers are used which, as is often the case in practice, are not entirely straight. It is quite probable in that case that, even when the shaking movement is continued for a relatively long period, a carrier will not be present in every groove.

The object of the present invention is to prevent the above mentioned problems.

For this purpose the device according to the present invention is therefore characterized in that the grooves are dimensioned such that a carrier fits amply therein for preventing that more than one carrier enters the same groove; the at least one through-slot has a cross section at least partially converging from the top to the bottom; and the thickness of the slide plate roughly corresponds to the depth of the grooves for avoiding a bridge-like blockage by a number of carriers at the narrowing of the slot.

Due to the above steps the need to arrange rollers in the slots no longer exists, so that the number of separate components is considerably limited. Regular cleaning is greatly simplified herewith.

Due to the dimensioning of the slide plate and the form of the slots arranged therein the carriers are as it were guided towards the grooves. It is only necessary for this purpose for the slide plate to perform one reciprocating movement. The continuing of a shaking movement for a long period is hereby avoided so that the device according to the present invention also operates more rapidly. The specific design of the slot and the groove also guides slightly curved carriers into the groove without problem.

As a consequence of the relatively large surface area of the upper part of the slot the chance of a carrier dropping into the slot is great, wherein due to the converging shape of the cross section the carrier is oriented parallel to the groove.

Because the thickness of the slide plate is approximately equal to the thickness of the carrier, bridge-forming is avoided. Understood by bridge-forming is the effect wherein a number of carriers form a bridge-like blockage at a narrowing of a channel.

The device according to the present invention will be elucidated hereinbelow with reference to the annexed drawings, wherein:
fig. 1 shows a perspective, partly broken away view of the device according to the present invention;
fig. 2 shows a partly broken away, perspective detail view of the device according to the present invention;
fig. 3 is a sectional view of a first embodiment of the slot arranged in the slide plate according to the present invention;
fig. 4 is a sectional view of the slot depicted in fig. 3 in another position; and
fig. 5 is a sectional view of a second embodiment of the slot depicted in fig. 3.

The device according to the present invention is constructed on a frame of which only the brackets 1, 2 are shown in the drawing. Fixed into each of the brackets 1 and 2 are guide rods 3 and 4 respectively which are supported on the frame at their other end by brackets not shown in the drawing.

Each of the guide rods 3, 4 bears a plate 5 and 6 respectively that is bent in a U-shape and provided on its long side with pins 7 on which are mounted rollers 8. The rollers 8 rest on the respective guide rods 3, 4. Both U-shaped plates 5, 6 are mutually connected by means of a base plate 9. It is also possible however for both U-shaped plates to be formed as one unit. Thus obtained is a construction which is movable along the guide rods 3, 4 in the direction parallel to these rods.

Arranged for driving the thus obtained system in this direction is a drive cylinder 10, the piston rod of which is connected to a bracket 11 connected fixedly to the U-shaped plate 5.

A number of grooves 12 extending parallel to the guide rods 3, 4 is arranged in the base plate 9. The dimensions of the grooves 12 are such that a carrier for handling fits amply therein.

A sleeve 13 enclosing the base plate 9 is further arranged on one end of plate 9. Arranged in the upper part of the sleeve 13 at the position of each of the grooves 12 is a hole 14. In each of the grooves 12 is arranged a pressing member 15 which extends over a certain length through the groove 12 and the end of which is bent over at the side of sleeve 13, and this bent end extends through the opening 14.

Fixed to the underside of the sleeve is a block 16 which is connected by means of a piston rod 17 to a linear drive cylinder 18. The sleeve 13, and therewith each of the pressing members 15, can hereby be moved in the direction parallel to the grooves, wherein the pressing members 15 can move reciprocally through the groove.

At the other side two bearing rails 19 are arranged on the base plate 9. Arranged on these rails is a rectangular supply bin 20 for the round carriers, in general kebab sticks. The supply bin 20 is divided into compartments by means of partitions 21, this such that a separate supply compartment is available for each of the grooves 12. During use, each of the compartments is filled with carriers, in this case kebab sticks 22.

The rail 19 present at the end of plate 9 otherwise functions as guide for the kebab sticks 22 moving through the grooves 12.

A slide plate 23 is arranged enclosed by the base plate 9, the rails 19 and the supply bin 20. This slide plate 23 is freely movable in the direction extending perpendicularly to the grooves 12.

Welded onto the right-hand side of the slide plate 23 in the drawing are two ears 24 into which are fixed shafts 25. These shafts 25 extend through holes which are arranged in brackets 26 arranged against the U-shaped plate 5. A coil spring 27 is arranged around the relevant shaft 25 between each of the ears 24 and the associated bracket.

Arranged against the upper side of the slide plate 23 on the other side thereof is a bent profile 28. An L-shaped bracket 29 is further arranged fixedly relative to the frame, which bracket extends over the profile 28 and which is provided with two wheels 30 extending to either side of and touching the profile 28.

When the base plate 9 performs a linear movement by means of the linear drive means 10 the profile 28 will, through guiding of the profile 28 by the wheels disposed fixedly relative to the base plate 9, transmit to the slide plate a movement extending perpendicular to said first movement. When the base plate 9 thus carries out one reciprocating stroke, the slide plate 23 will carry out one transverse stroke.

Also arranged on the guide rod 3 is a bracket 1 and arranged on the guide rod 4 is a similar bracket not shown in the drawing. Both brackets are connected by a guide plate 32. The guide plate 32 is situated against a feed and positioning device for material to be skewered on the kebab sticks, for instance pieces of meat. This fixedly disposed device does not form subject-matter of the present invention, and will therefore not be discussed further. Such devices are in any case known in the prior art.

This guide plate 32 is driven by a linear drive cylinder 34 by means of brackets 31.

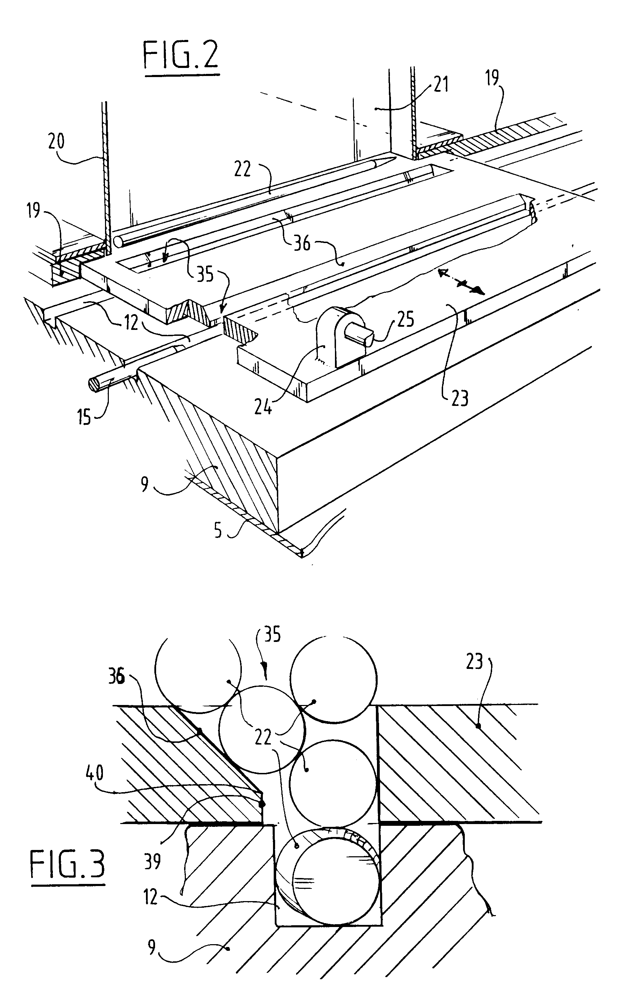

Fig. 2 shows the construction of the base plate 9 and the slide plate 23 in more detail. Shown herein is how a number of slots 35 is arranged in the slide plate 23, one at the location of each of the grooves 12. It can also be seen here how each of the slots 35 is provided with a chamfered side wall 36.

The operation of the device according to the present invention will now be described.

It is assumed here that each of the compartments 21 in the supply bin 20 is filled with kebab sticks 22. It is also assumed that a kebab stick 22 is situated in each of the grooves 12 under the supply bin 20. The base plate 9 is then situated in its extreme position as shown in the drawing. The cylinder 10 is then energized whereby the base plate 9 with all members arranged thereon is moved against the guide plate 32, whereafter this movement ceases. The linear drive cylinder 18 is subsequently energized, whereafter the sleeve 13 with the pressing members 15 fixed thereto is moved in the grooves 12 in the direction towards the guide plate 32. The pressing members 15 herein each press the kebab skewer 22 present in the grooves under the supply bin 20 out of the groove 12 through the guide openings 37 arranged in the guide plate 32 into the product 38 for skewering disposed in the line of these guide openings 37. The thus obtained kebab sticks with the skewered product is then removed. This does not however form any part of the subject-matter of the present application and is not elucidated further.

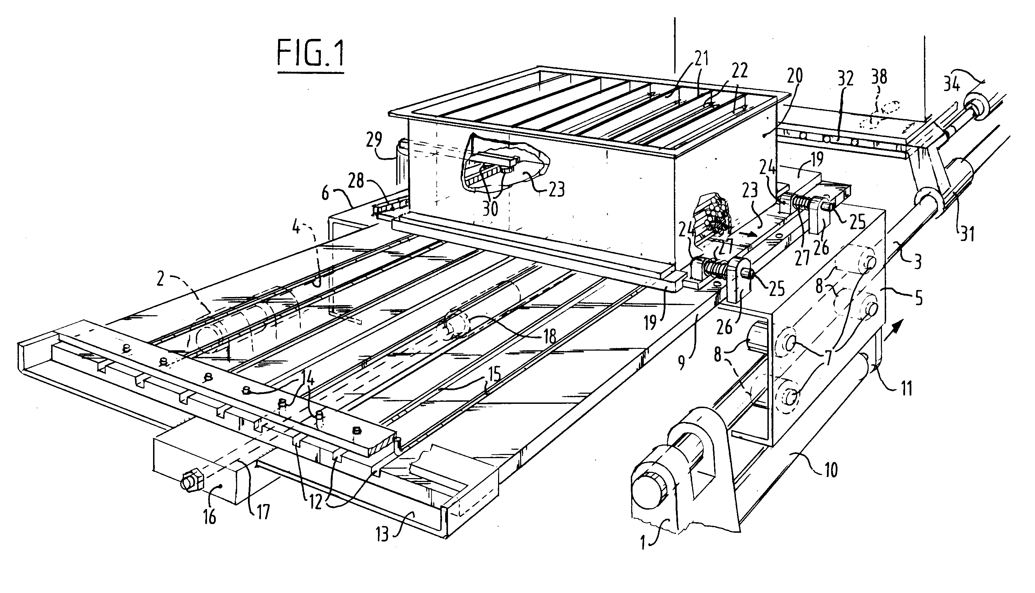

Thereafter, by energizing the cylinder 28 in reverse direction, the sleeve 13 and the pressing members 15 connected thereto are moved back to their starting position, wherein the grooves 12 are left empty under the supply bin 20. Through reverse energizing of the cylinder 10 a movement of the base plate 9 to its starting position as shown in fig. 1 then also takes place.

Through guiding of the profile 28 by the fixedly disposed wheels 30 the slide plate 23 will undergo a reciprocating movement during this return movement. The stroke of this movement is chosen through dimensioning of the profile 28 such that the slide plate 23 carries out a reciprocating movement.

During this reciprocating movement one kebab stick 22 situated in a compartment 21 of supply bin 20 is guided by the force of gravity into the slot 35. The form of the slot 35, which will be further discussed later with reference to fig. 3-5, is such that only one kebab stick 22 can fall into the bottom part of the slot 35. When during the reciprocating movement a groove 12 in the base plate 9 lying thereunder is passed over, the relevant kebab stick 22 will drop into the groove 12. Any following kebab sticks 22 are prevented from entering the groove 12 by the dimensioning of the groove and the slot located thereabove. The cycle described can thereafter be repeated.

Fig. 3 shows a sectional view of the base plate 9 with a groove 12 arranged therein and of the slide plate 23 with slot 35 arranged therein. In the position shown in fig. 3 the slot 35 is arranged precisely above the groove 12 and it can be seen how one kebab stick 22 has entered the groove 12 due to the force of gravity. The other kebab sticks 22 constrained downward by the force of gravity cannot enter the groove 12 since a stick 22 is already present therein.

It will also be apparent that, when the plate 23 with the slot 35 arranged therein subsequently moves to the right, the kebab sticks 22 visible in the drawing will be carried along and cannot drop into the groove 12. It is important here that the side 36 of slot 35 is chamfered and that only a bottom straight edge 37 is present.

The dimensioning of parts is such herein that the sum of the depth of the groove 12 plus the height of the edge 37 is smaller than 1.5 times the mean diameter of a kebab stick 22. Thus achieved is that a kebab stick 22 situated at the bottom of the slot 35 is gripped by the sharp edge 40 below its middle point and a force is thereby exerted by the edge 40 on the kebab stick 22 which comprises an upward oriented and no downward oriented component. This prevents the kebab stick from being forced downward and being destroyed as a result of the continuing movement between the edge 40 and the opposite edge between the groove 12 and the base plate 9. During a forward stroke the straight wall will orient any kebab stick that may be askew in the slot so that it lies parallel to the groove.

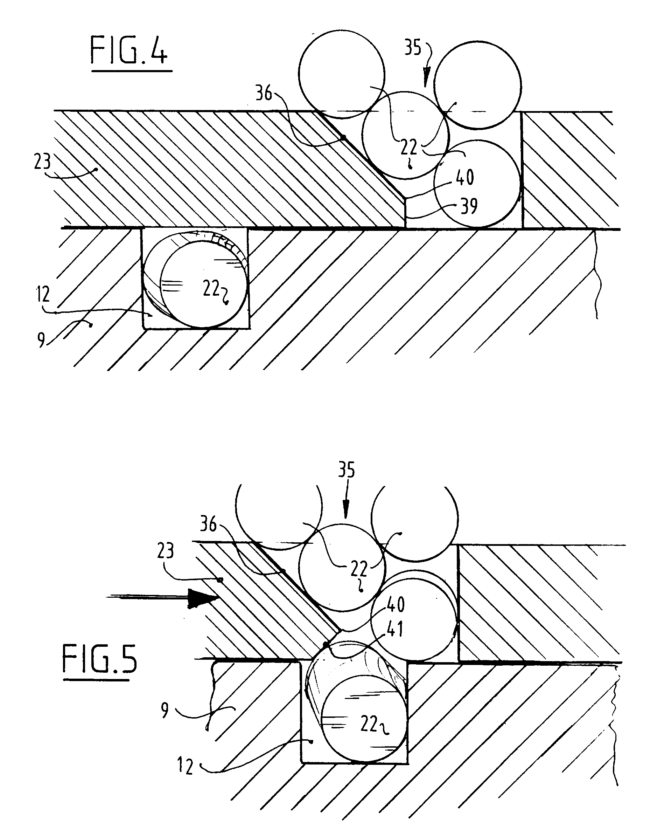

Fig. 4 shows how this movement to the right progresses. The kebab stick 22 situated in the groove 12 can now be pressed out in lengthwise direction by the pressing member 15, whereafter the slide plate 23 can again move to the left and the bottom kebab stick 22 present in the slot 35 can fall into the groove 12. It is of course necessary here that during the stroke of the plate 23 the slot 35 is located at least once above the groove 12.

Finally, fig. 5 shows a last embodiment, wherein the bottom straight wall 39 is replaced by a chamfering 41. As drawn in fig. 5, this chamfering is particularly important when the kebab sticks 22 are slightly curved and a portion of these sticks therefore extends above the level of the groove 12. Due to the chamfering 41 this portion can then also be forced back into the groove.

The above text relates to a preferred embodiment of the present invention. It is possible within the scope of the claims to depart from this embodiment.

## Claims

1. Device for skewering kebab by placing one, and not more than one, elongate carrier (22) of substantially round section into each of a number of grooves (12) arranged in a base plate (9), comprising:
- a holder (20) arranged above the base plate (9) for carriers (22) extending substantially parallel to the groove (12);
- a slide plate (23) which is arranged between the holder (20) and the base plate (9) and which is provided with at least one through-slot (35) extending parallel to the grooves arranged in the base plate (9), and which is movable in the direction extending perpendicularly thereof,
**characterized in that**
- the grooves (12) are dimensioned such that a carrier (22) fits amply therein for preventing that more than one carrier (22) enters the same groove 12);
- the at least one through-slot (35) has a cross section at least partially converging from the top to the bottom; and
- the thickness of the slide plate (23) roughly corresponds to the depth of the grooves (22) for avoiding a bridge-like blockage by a number of carriers (22) at the narrowing of the slot (35).

2. Device as claimed in claim 1, **characterized in that** the converging part of the cross section of the through slot (35) is arranged above the non-converging part.

3. Device as claimed in claim 2, **characterized in that** one side of the through-slot (35) is straight and the other side is substantially sloping (36), but straight (39) thereunder.

4. Device as claimed in claim 2, **characterized in that** a chamfering (41) is arranged at the bottom of the sloping side (36) of the groove.

5. Device as claimed in claim 2, 3 or 4, **characterized in that** the distance between the bottom edge of the sloping part (36) of the through-slot (35) and the bottom of the groove (12) is smaller than 1.5 times the anticipated mean thickness of a carrier (22).

6. Device as claimed in any of the foregoing claims, **characterized in that** the smallest passage of the cross section of the at least one through-slot (35) substantially corresponds with the width of the grooves (12).

7. Device as claimed in any of the foregoing claims, **characterized in that** more than one groove (12) is arranged in the base plate (9) and that the number of through-slots (35) in the slide plate (23) corresponds with the number of grooves (12).

8. Device as claimed in any of the foregoing claims, **characterized in that** the holder (20) is arranged fixedly relative to the base plate (9).

9. Device as claimed in any of the foregoing claims, **characterized by** drive means (28, 29, 30) for the slide plate (23) which cause said slide plate (23) to perform one stroke during each operating cycle.

10. Device as claimed in any of the foregoing claims, **characterized in that** the base plate (9) is coupled to drive means (10) which cause said base plate to perform one reciprocating movement during each operating cycle.

11. Device as claimed in claims 9 and 10, **characterized in that** the drive means are formed by an elongate guide (28) arranged on the slide plate (23) and by fixedly arranged guide wheels (20) situated on either side of said guide (28).

12. Device as claimed in any of the foregoing claims, **characterized in that** the holder (20) is divided by partitions (21) into elongate compartments, wherein the lengthwise direction of said compartments is parallel to the grooves (12).

13. Device as claimed in claim 12, **characterized in that** a compartment is arranged for each groove (12).

14. Device as claimed in any of the foregoing claims, **characterized by** pressing members (15) which press the skewers present in the grooves (12) out of the base plate (9) during each operating cycle.

## Patentansprüche

1. Aufspießvorrichtung für Kebab, in dem ein und nicht mehr als ein länglicher Träger (22) mit im wesentlichem runden Querschnitt in jede von einer Vielzahl an Nuten (12) plaziert wird, welche in einer Grundplatte (9) angeordnet sind, mit:
- einer Halteeinrichtung (20), welche über der Grundplatte (9) für die Träger (22) angeordnet ist, welche im wesentlichen parallel zur Nut (12) verlaufen,
- einer Gleitplatte (23), welche zwischen der Halteeinrichtung (20) und der Grundplatte (9) angeordnet und mit mindestens einer Durchgangsöffnung (35) ausgestaltet ist, welche sich parallel zu den in der Grundplatte (9) angeordneten Nuten erstreckt, und welche senkrecht zu ihrer Erstreckungsrichtung bewegbar ist,
dadurch gekennzeichnet, daß
- die Nuten (12) derart dimensioniert sind, daß ein Träger (22) die Nuten so ausfüllt, daß ein Eintreten von mehr als einem Träger (22) in die gleiche Nut (12) verhindert wird;
- die zumindest eine Durchgangsöffnung (35) einen zumindest teilweise vom Oberteil zum Unterteil zusammenlaufenden Querschnitt aufweist; und
- die Dicke der Gleitplatte (23) ungefähr der Tiefe der Nuten (12) entspricht, so daß eine brückenähnliche Blockade durch mehrere Träger (22) an der Verengung der Öffnung (35) verhindert wird.

2. Vorrichtung nach Anspruch 1, dadurch gekennzeichnet, daß der zusammenlaufende Teil des Querschnitts der Durchgangsöffnung (35) über dem nicht zusammenlaufenden Teil angeordnet ist.

3. Vorrichtung nach Anspruch 2, dadurch gekennzeichnet, daß eine Seite der Durchgangsöffnung (35) gerade und die andere Seite im wesentlichen geneigt (36), aber darunter gerade (39) ist.

4. Vorrichtung nach Anspruch 2, dadurch gekennzeichnet, daß eine Abschrägung (41) am Unterteil der geneigten Seite (36) der Nut angeordnet ist.

5. Vorrichtung nach Anspruch 2, 3 oder 4, dadurch gekennzeichnet, daß der Abstand zwischen der Unterteil-Kante des geneigten Teils (36) der Durchgangsöffnung (35) und das Unterteil der Nut (12) kleiner als 1 1/2 mal der vorbekannten Durchschnittsdicke eines Trägers (22) ist.

6. Vorrichtung nach einem der vorstehenden Ansprüche, dadurch gekennzeichnet, daß der schmälste Durchgang des Querschnitts der zumindest einen Durchgangsöffnung (35) im wesentlichen der Breite der Nuten (12) entspricht.

7. Vorrichtung nach einem der vorstehenden Ansprüche, dadurch gekennzeichnet, daß mehr als eine Nut (12) in der Grundplatte (9) angeordnet ist, und daß die Anzahl an Durchgangsöffnungen (35) in der Gleitplatte (23) der Anzahl der Nuten (12) entspricht.

8. Vorrichtung nach einem der vorstehenden Ansprüche, dadurch gekennzeichnet, daß die Halteeinrichtung (20) fest relativ zur Grundplatte (9) angeordnet ist.

9. Vorrichtung nach einem der vorstehenden Ansprüche, gekennzeichnet durch Antriebsmittel (28, 29, 30) für die Gleitplatte (23), die bewirken, daß die Gleitplatte (23) während jedes Betriebszyklus einen Hub durchführt.

10. Vorrichtung nach einem der vorstehenden Ansprüche, dadurch gekennzeichnet, daß die Grundplatte (9) mit den Antriebsmitteln (10) gekoppelt ist, welche ein Hin- und Herbewegen der Grundplatte während jedes Betriebszyklus bewirken.

11. Vorrichtung nach Anspruch 9 und 10, dadurch gekennzeichnet, daß die Antriebsmittel durch eine auf der Gleitplatte (23) angeordnete längliche Führung (28) und durch fest angeordnete Führungsräder (20) gebildet werden, welche auf beiden Seiten der Führung (28) angeordnet sind.

12. Vorrichtung nach einem der vorstehenden Ansprüche, dadurch gekennzeichnet, daß die Halteeinrichtung (20) durch Trennelemente (21) in längliche Fächer unterteilt wird, wobei die Längsrichtung der Fächer parallel zu den Nuten (12) ist.

13. Vorrichtung nach Anspruch 12, dadurch gekennzeichnet, daß eine Fach für jede Nut (12) angeordnet ist.

14. Vorrichtung nach einem der vorstehenden Ansprüche, gekennzeichnet durch Preßelemente (15), welche die in den Nuten (12) anwesenden Spieße aus der Grundplatte (9) während jedes Betriebszyklus drücken.

## Revendications

1. Dispositif embrocheur de kebabs en disposant un, et au plus un support (22) allongé de section sensiblement circulaire dans chaque rainure d'une série de rainures (12) ménagées dans une plaque de base (9), comprenant :
- un organe de maintien (20) disposé au-dessus de la plaque de base (9) de manière à ce que les supports (22) s'étendent sensiblement parallèlement à la rainure (12) ;
- une plaque (23) coulissante placée entre l'organe de maintien (20) et la plaque de base (9) et munie d'au moins une fente traversante (35) s'étendant parallèlement aux rainures ménagées dans la plaque de base (9), et mobile en direction perpendiculaire à cette plaque de base (9), caractérisé en ce que
- les rainures (12) ont des dimensions telles qu'un support (22) s'ajuste largement à l'intérieur de manière à empêcher que plus d'un support (22) pénètre dans la même rainure (12) ;
- la au moins une fente traversante (35) est de section transversale au moins partiellement convergente depuis le haut vers le bas ; et
- l'épaisseur de la plaque coulissante (23) correspond approximativement à la profondeur des rainures (12) de manière à éviter un blocage du type à pont par un certain nombre de supports (22) au niveau du rétrécissement de la fente (35).

2. Dispositif selon la revendication 1, caractérisé en ce que la portion convergente de la section transversale de la lente traversante (35) est disposée au-dessus de la portion non convergente.

3. Dispositif selon la revendication 2, caractérisé en ce qu'un côté de la fente traversante (35) est droit et l'autre côté est sensiblement en pente (36), mais droit (39) au-dessous.

4. Dispositif selon la revendication 2, caractérisé en ce qu'un chanfrénage (41) est ménagé au bas du côté en pente (36) de la fente.

5. Dispositif selon la revendication 2, 3 ou 4, caractérisé en ce que la distance entre le bord inférieur du tronçon en pente (36) de la fente traversante (35) et le fond de la rainure (12) est inférieure à 1,5 fois l'épaisseur moyenne prévisible d'un support (22).

6. Dispositif selon l'une quelconque des revendications précédentes, caractérisé en ce que le plus petit passage de la section transversale de la au moins une fente traversante (35) correspond sensiblement à la largeur des rainures (12).

7. Dispositif selon l'une quelconque des revendications précédentes, caractérisé en ce que plus d'une rainure (12) est ménagée dans la plaque de base (9) et en ce que le nombre de fentes traversantes (35) de la plaque coulissante (23) correspond au nombre de rainures (12).

8. Dispositif selon l'une quelconque des revendications précédentes, caractérisé en ce que l'organe de maintien (20) est placé rigidement par rapport à la plaque de base (9).

9. Dispositif selon l'une quelconque des revendications précédentes, caractérisé par des moyens d'entraînement (28, 29, 30) de la plaque coulissante (23) qui permettent à la plaque coulissante (23) de réaliser une course au cours de chaque cycle de fonctionnement.

10. Dispositif selon l'une quelconque des revendications précédentes, caractérisé en ce que la plaque de base (9) est associée à des moyens d'entraînement (10) qui permettent à la plaque de base de réaliser un mouvement en va-et-vient au cours de chaque cycle de fonctionnement.

11. Dispositif selon les revendications 9 et 10, caractérisé en ce que les moyens d'entraînement comprennent un guide (28) allongé disposé sur la plaque coulissante (23) et des roues de guidage (20) placées fixement sur chacun des côtés du guide (28).

12. Dispositif selon l'une quelconque des revendications précédentes, caractérisé en ce que l'organe de maintien (20) est divisé par des cloisons (21) en compartiments allongés, la direction longitudinale de ces compartiments étant parallèle aux rainures (12).

13. Dispositif selon la revendication 12, caractérisé en ce qu'un compartiment est réalisé pour chaque rainure (12).

14. Dispositif selon l'une quelconque des revendications précédentes, caractérisé par des moyens de pression (15) qui exercent une pression sur les broches plaçées dans les rainures (12) vers l'extérieur de la plaque de base (9) au cours de chaque cycle de fonctionnement.
